# FASCICULE DE BREVET EUROPEEN

(11) **EP 1 697 438 B1**
(45) Date de publication et mention de la délivrance du brevet: **02.03.2011**
(21) Numéro de dépôt: 04816402.4
(22) Date de dépôt: 16.12.2004
(51) Int. Cl.: C08G 18/78, C08G 18/34, C07C 273/18

(54) **SYNTHESE D ACYLUREES ET COMPOSITION COMPORTANT DES ACYLUREES**
SYNTHESE VON ACYLHARNSTOFFEN UND ACYLHARNSTOFFE ENTHALTENDE ZUSAMMENSETZUNG
SYNTHESIS OF ACYLUREAS AND COMPOSITION COMPRISING ACYLUREAS

(30) Priorité: 24.12.2003 FR 0315409
(43) Date de publication de la demande: 06.09.2006
(73) Titulaire: Perstorp France, 69800 Saint-Priest (FR)
(72) Inventeur: BERNARD, Jean-Marie Alphonse Etienne, F-69440 SAINT-LAURENT D'AGNY (FR); REVELANT, Denis, F-69740 GENAS (FR); AMOUYAL, Cédric, 42800 Saint-Joseph (FR)
(74) Mandataire: Colombet, Alain André
(86) Numéro de dépôt international: PCT/FR2004/003262
(87) Numéro de publication internationale: WO 2005/070882

(56) Documents cités:
- EP-A- 1 238 993
- DE-B- 1 230 778
- GB-A- 1 515 523
- US-A- 4 625 052

## Description

La présente invention à pour objet des compositions comportant des acylurées et un procédé pour obtenir de telles compositions : il vise également un procédé amélioré conduisant à des oligomères à base de biuret.

Pour replacer la présente invention dans le contexte industriel et sémantique il convient de procéder à un certain nombre de rappel et de préciser ou remémorer un certain nombre de définition.

Dans leur majorité, les compositions polyisocyanates sont le plus souvent formées de dérivés issus d'oligocondensation de molécule(s) unitaire(s) di-, tri, voire tétra isocyanate.

Un tel type de molécule est qualifié de « monomères » et est susceptible d'être obtenues par phosgénation d'une diamine primaire, éventuellement porteuse d'une, voire de deux, autres fonctions amine primaire. Ainsi une telle molécule contient un motif constitué d'une chaîne carbonée porteuse d'au moins deux azotes (provenant de la diamine à phosgéner), motif que l'on désignera par « motif di-amino » dans la suite de la description. Le motif di-amino sert ici de vestiges ou de trace de l'existence passée ou présente d'un monomère isocyanate : ainsi le motif di-amino est de structure

>N-R-N<

où R représente un radical hydrocarboné qui est le reste d'un monomère isocyanate après ignorance de deux fonctions isocyanate. Bien entendu R ne présente aucune des fonctions créées lors de l'oligomérisation d'une fonction isocyanate, à savoir les fonctions carbamate, urée (y compris biuret), allophanate, biuret et celles qui sont mentionnées à l'occasion de la description des oligocondensation (y compris oligomérisation). La masse moléculaire de -R-est au plus égale à 200. R peut comporter un autre groupe « amino » dans le cas des monomères trifonctionnel comme le LTI, le NTI et l'UTI.

Les signes « amino » N< et >N signifient que l'azote peut être engagé dans toute fonction telle que fonction isocyanate, amine, amide, imide, urée et notamment les fonctions engendrées par les réactions d'oligomérisation.

Ces motifs di-amino se retrouve dans la quasi-totalité des oligocondensation et dans l'immense majorité des transformations des fonctions isocyanates. Cette constatation permet de faire référence au nombre de motifs di-amino pour indiquer notamment l'état de condensation des et des oligocondensats (y compris oligomères) voire des polycondensats, et même en cas d'hétérocondensats (auxquels cas on pourra avoir plusieurs types de motifs di-amino).

Selon l'usage courant en chimie, lorsqu'une fonction a donné son nom à une famille de composés, comme c'est le cas pour les isocyanates, on définit le caractère aromatique ou aliphatique selon le point d'attache de la fonction considérée. Lorsqu'un isocyanate est situé sur un carbone de nature aliphatique, alors on considère que le composé isocyanate est lui-même de nature aliphatique. De même, lorsqu'une fonction isocyanate est rattachée au squelette par l'intermédiaire d'un carbone de nature aromatique, alors on désignera l'ensemble du monomère par l'expression isocyanate aromatique.

Pour expliciter ce point on peut rappeler que :
- On considère comme aromatique toute fonction isocyanate dont le point d'attache est un maillon d'un cycle aromatique.
- on considère comme aliphatique toute fonction isocyanate dont le point d'attache (de l'azote bien sûr) est un carbone d'hybridation sp³.

Parmi les isocyanates aliphatiques on peut faire les distinctions suivantes :
- On considère comme cycloaliphatiques, toute fonction isocyanate aliphatique dont le point d'attache est distant d'un cycle le plus proche d'au plus un carbone (il est même de préférence, est reliée directement à lui).
- On considère comme secondaire toute fonction isocyanate dont le point d'attache est porté par un carbone sp³ secondaire (c'est-à-dire un carbone relié à deux carbones et à un hydrogène).
- On considère comme tertiaire, toute fonction isocyanate dont le point d'attache est porté par un carbone sp³ tertiaire, (c'est-à-dire un carbone relié à trois carbones).
- On considère comme néopentylique toute fonction isocyanate dont le point d'attache est porté par un carbone sp³, lui-même porté par un carbone tertiaire (c'est-à-dire compte non tenu de la dernière liaison, un carbone relié à trois carbones).
- On considère comme linéaire toute fonction isocyanate dont le point d'attache est porté par un méthylène sensu stricto (-CH₂-), lui-même porté par un carbone sp³ exocyclique et non tertiaire.

En ce qui concerne les monomères, on entend pour la suite de la description par :
- Aliphatique tout monomère dont toutes les fonctions isocyanates sont aliphatiques ;
- Aromatique tout monomère dont toutes les fonctions isocyanates sont aromatiques ;
- Mixte tout monomère dont une fonction au moins est aliphatique et dont une fonction au moins est aromatique ;
- cycloaliphatique tout monomère dont toutes les fonctions isocyanates sont aliphatiques et dont une au moins est cycloaliphatique ;
- aliphatique linéaire tout monomère dont toutes les fonctions isocyanates sont aliphatiques, dont aucune n'est cycloaliphatique et dont une au moins est linéaire, ou qui présentent au moins un enchaînement polyméthylène, libre en rotation, et donc exocyclique, (CH₂)_{π} où π représente un entier au moins égal à deux 2.

Si l'on détaille un peu plus, les isocyanates monomères peuvent être :
◆ aliphatiques, y compris cycloaliphatiques et arylaliphatiques (ou araliphatique), tels que :
   - comme aliphatique linéaire (ou simples), les polyméthylènediisocyanates monomères qui présentent un ou des enchaînements polyméthylène exocycliques (CH₂)_{π} où π représente un entier de 2 à 10, avantageusement de 4 à 8 et notamment l'hexaméthylène diisocyanate l'un des méthylène pouvant être substitué par un radical méthyle ou éthyle comme c'est le cas du MPDI (méthyl pentaméthylène diisocyanate);
   - comme aliphatique cyclique (ou cycloaliphatique) : partiellement "néopentylique" et cycloaliphatique ; l'isophorone diisocyanate (IPDI) ;
   - comme aliphatique cyclique (cycloaliphatique) diisocyanate ceux dérivés du norbornane ou les formes hydrogénées (hydrogénation du noyau conduisant à un cycle diaminé ensuite soumis à une isocyanatation par exemple par phosgénation) des isocyanates aromatiques ;
   - comme araliphatiques les arytènediatcoytènediisocyanates (tel que OCN-CH₂-Φ-CH₂-NCO ; dont une partie est réputée aliphatique linéaire, à savoir ceux dont la fonction isocyanate est distante des noyaux aromatiques d'au moins deux carbones tels que (OCN-[CH₂]ₜ-Φ-[CH₂]ᵤ-NCO) avec t et u supérieur à 1 ;
◆ ou encore aromatiques tels que le toluylène diisocyanate mentionné ici pour mémoire mais dont, en revanche; la forme hydrogénée est réputée cycloaliphatique et est intéressante tel les 1,3 et 1,4 BIC (Bislsocyanatométhyle Cyclohexane).

D'une manière générale la masse moléculaire d'un monomère ne dépasse pas 300 et est au moins égal à 100.

Selon la présente invention, il est souhaitable que les monomères aliphatiques linéaires soient utilisés au moins en partie pour la mise en oeuvre de la présente invention aussi peut-on ajouter à ceux qui sont mentionné ci dessus, les dérivés de la lysine et notamment ie LDI (Lysine Di-Isocyanate, issu d'ester de la lysine), LTI (lysine tri-isocyanate, issu de l'ester de la lysine avec l'éthanolamine), le NTI (NonylTri-isocyanate OCN-(CH₂)₄-CH(CH₂-NCO)-(CH₂)₃-NCO), l'UTI (Undécyle Tri-Isocyanate OCN-(CH₂)₅-CH(-NCO)-(CH₂)₅-NCO).

La plupart de ces monomères ont une tension de vapeur trop élevée pour répondre aux contraintes réglementaires relatives à la sécurité du travail. Aussi alourdit-t-on ces molécules en les polycondensant.

Ces condensations mettent en jeu les fonctions isocyanates. Les « monomères » étant polyfonctionnel en isocyanate, ces condensations pourront avoir lieu sur deux ou plusieurs fonction isocyanate d'une même molécule. Il s'ensuit que ces réactions pourront conduire à des oligomère plus ou moins lourds selon le taux de transformation des isocyanates

On rappellera ci-après les principaux polycondensats :
Les dérivés obtenus par "trimérisation", c'est-à-dire que l'on condense trois fonctions isocyanate appartenant à trois molécules différentes pour former un cycle isocyanurique porteur de trois groupes eux-mêmes porteurs d'une fonction isocyanate.

On peut rappeler les principaux motifs, fonctions ou cycles susceptibles de se former à l'occasion de la trimérisation :

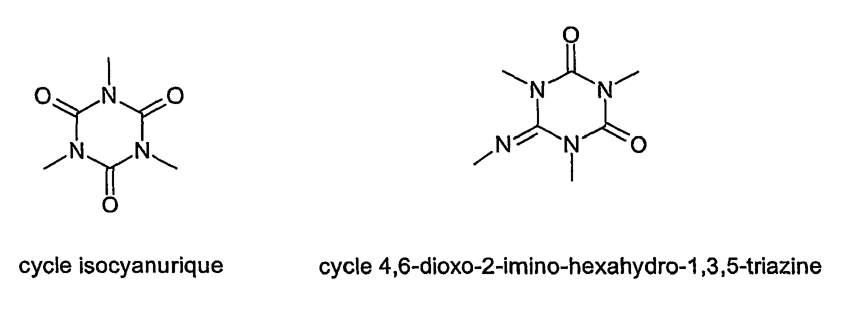

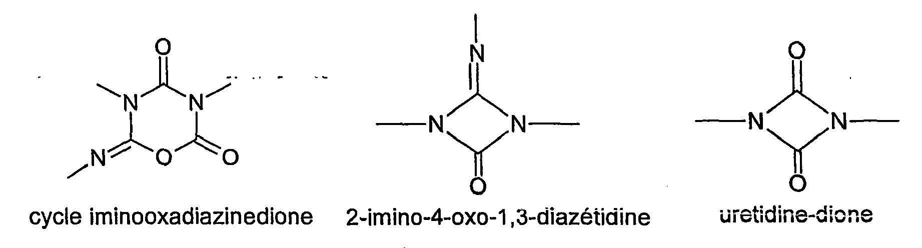

Une autre manière d'alourdir la molécule est de les faire se condenser les unes sur les autres en présence d'eau pour former un dérivé porteur de trois fonctions isocyanates que l'on désigne sous l'expression de biuret. La réaction ci-après montre la réaction dans le cas le plus fréquent c'est-à-dire le cas où les trois molécules à condenser sont les mêmes :

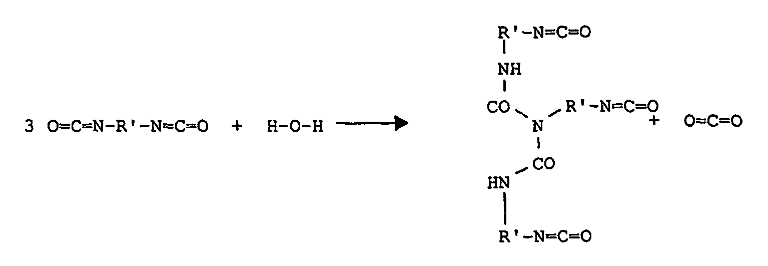

On peut également condenser ces monomères sur des alcools, notamment des polyols, ce qui donne des composés polyfonctionnels, carbamates puis allophanates.

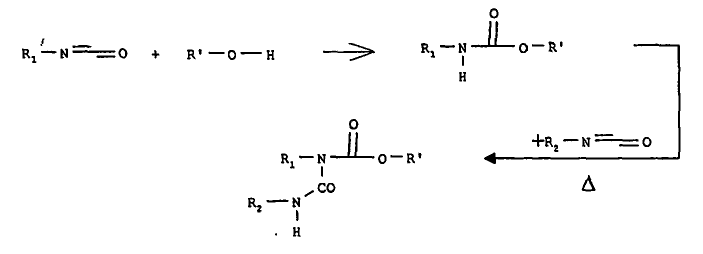

Dans les compositions polyisocyanates, le plus souvent l'on trouve, à coté des polycondensats majoritaires, des quantités mineures de divers type de condensation.

Dans leur grande majorité, les isocyanates étaient, jusqu'il y a peu, essentiellement dissous dans des solvants organiques. L'utilisation de solvants organiques est de plus en plus souvent critiquée par les autorités en charge de la sécurité du travail, car ces solvants, ou du moins certains d'être eux, sont réputés toxiques ou chronotoxiques. C'est la raison pour laquelle on essaye de développer de plus en plus des techniques qui ne contiennent que peu de solvant, voire qui soient sans solvant.

En particulier, pour diminuer l'utilisation de solvant organique, dont la présence est réputée toxique pour ceux qui le manipulent et néfaste pour l'environnement, l'on a proposé de mettre au point des compositions isocyanates moins visqueuses. Cet abaissement de viscosité permet de réduire la quantité de solvant et rend les compositions plus aptes à être émulsionnées.

Parmi les compositions polyisocyanate oligomériques les plus utilisées, on peut citer notamment le mélange d'oligomère présentant un motif biuret et désigné familièrement par « biuret ».

Ce biuret est actuellement réalisé par action de l'eau sur des monomères isocyanate en présence de quantité très faible, d'acide.

Le taux de transformation du monomère est de l'ordre de 45%.

Dans le cas ou le monomère est de l'hexaméthylène diisocyanate la viscosité du produit résultant de la synthèse après distillation du monomère est de l'ordre de 9000 mPa.s.

US-A-4625 052 décrit un procédé de préparation de polyisocyanates comportant des groupes biurets, ceci pour tenter d'empêcher la formation d'uréides insolubles. Pour parvenir à ceci, seul un acide de force moyenne est utilisé.

Cette synthèse présente deux inconvénients notables: la formation d'uréides insolubles qu'il convient d'éliminer et d'autre part la viscosité relativement élevée du produit après distillation du monomère.

Par ailleurs le marché demande des compositions présentant une haute fonctionnalité.

C'est pourquoi un des buts de la présente invention est de procurer un procédé qui réduise ou supprime la formation d'uréides insolubles.

Un autre but de la présente invention est de procurer des compositions isocyanate à groupement biuret.

Un autre but de la présente invention est de procurer un procédé qui permette de réduire la viscosité de la composition finale pour le même taux de transformation du ou des monomères(s), la mesure de la viscosité étant réalisée dans les conditions dites normales, après élimination du, ou des, monomère(s) résiduel(s) (les compositions visées présentent en masse au plus 1%, avantageusement au plus 0,5%, de préférence au plus 0,2%, plus préférentiellement au plus 0,1%). Pour ,la mesure de la viscosité voir norme NFT30-029 (octobre 1980).

Un autre but de la présente invention est de procurer des compositions à groupement biuret qui présente une viscosité réduite.

Un autre but de la présente invention est de fournir des compositions polyisocyanates à fonctionnalité élevée, qui peuvent être utilisées seule ou en mélange avec d'autre.

Ces buts et d'autres qui apparaîtront par la suite sont atteints au moyen d'un procédé de synthèse de composition polyisocyanate comportant des acylurées caractérisé par le fait que l'on soumet une composition dite initiale

comportant des dérivés comportant au moins deux fonctions isocyanate à l'action d'au moins deux acides dont l'un au moins est un acide fort (pKa ≤3) et dont un autre au moins est un acide de force moyenne (3 ≤ pKa ≤ 6) à une température au moins égale à 50°C.

Pour la force des acides l'on pourra se référer à l'ouvrage : « The détermination of ionisation constants by ALBERT & SERJEANT" éditeur: Chapman and Hall Ltd (1971)

Les superacides (constante de Hammett supérieure à 13) tel que l'acide triflique ou le bis triluorométhylsulfonimide ne sont pas préférés.

Les acides, forts ou faibles, peuvent être introduit (totalement ou partiellement) sous la forme d'un précurseur, susceptible de libérer l'acide par thermolyse (comme par exemple les iodoniums d'acide selon l'un des définitions ci dessus) ou par hydrolyse (comme les anhydrides d'acide, symétriques ou non, y compris les halogénures d'acide lorsque les anions halogénures ne sont pas une gêne).

Il est préférable que la température soit à une température au moins égale à 50°C. et même au moins égale 100°C. Pour les acides carboxyliques aromatiques on préfère des températures au moins égale à 110°C et même à 130°C.

La réaction est le plus souvent menée à une température d'au plus 200°C, avantageusement d'au plus 180°C, de préférence d'au plus 160°C.

Dans ces conditions opératoires il se forme des composés présentant un motif n-acylurée (figure 1) :

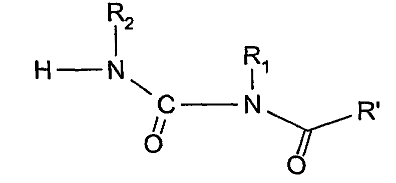

Dans cette formule R₂, et R₁, identique ou différent, représentent le reste d'un isocyanate, le plus souvent d'un monomère, après ignorance d'une fonction isocyanate (bien sûr, celle qui a réagi), R' est le reste d'un acide carboxylique après ignorance d'une fonction carboxylique (bien sûr, celle qui a réagi).

La réaction peut globalement s écrire :

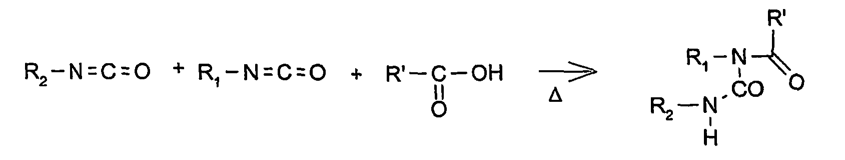

Il y a un dégagement de gaz carbonique (bioxyde de carbone) non figuré ici.

Il est préférable que dans le mélange initial au moins un des dérivés isocyanates soit un monomère (c'est-à-dire qu'il ne comporte qu'un motif di-amino tel que défini ci dessus). Il est également souhaitable que, compte non tenu des éventuels solvants, ledit mélange initial comporte en masse au moins le tiers et même la moitié, avantageusement les 2/3, de préférence les ¾ de monomère(s). Le plus souvent le mélange initial est constitué uniquement de monomère (aux impuretés et solvant près). Dans ce dernier cas le dérivé monomère, ou les dérivés monomères, représentent au moins 90%, avantageusement 95% en masse de la dite composition initiale.

Avantageusement le dérivé monomère, ou quand il y en a plus d'un, au moins un des dérivés monomères, est au moins partiellement aliphatique, c'est-à-dire qu'au moins une des, avantageusement deux des, de préférence toutes les fonctions amines du motif di-amino est portée par un carbone d'hybridation sp³.

Selon une mise en oeuvre avantageuse de la présente invention la synthèse des acylurées peut être menée dans le même milieu réactionnel la synthèse de biuret. Ainsi ladite composition polyisocyanate comporte des dérivés à fonction biuret. Pour ce faire ladite composition initiale est en outre mise en contact avec une amine ou un réactif aminogène, avantageusement de l'eau sous la forme d'un fluide (c'est-à-dire sous la forme vapeur ou liquide).

Bien entendu, comme cela est réalisé dans les installations actuelles, l'eau doit être finement dispersée.

Avantageusement ladite composition initiale est en outre mise en contact avec une amine ou un réactif aminogène, le rapport molaire entre l'amine (engendrée ou introduite) et la somme des monomères exprimé en mole étant choisi dans l'intervalle fermé (c'est-à-dire contenant les bornes) allant de ½ à 1/50, avantageusement dans celui allant de 1/3 à 1/25.

La synthèse des acylurées peut être menée avant la, après la, ou conjointement à la préparation des dérivés à fonction biuret. Avantageusement ladite composition initiale est mise en contact avec de l'eau en présence desdits acides moyen(s) et fort(s).

L'acide fort est avantageusement choisi parmi les organiques, et notamment les acides, aliphatiques ou aromatiques, sulfoniques, phosphoniques y compris carboxyliquephosphonique, ester phosphoriques, acide perhalogénoalcanoïques. Il est à noter que ledit acide carboxylique phosphonique est un acide qu rassemble dans une même molécule un acide fort et un acide moyen selon la présente invention. Dans ce type de cas il est possible de ne prévoir qu'un seul acide. Ce type d'acide conduit à une acylurée possédant des propriétés tensio-active marquée.

Selon un mode préféré de la présente invention ledit acide fort présente outre son acidité forte une autre acidité, en général moyenne. Dans ce cas il est préférable que les hydrogènes acides soient distants de 3 (comme par exemple dans un acide phosphonique non esterifié) ou 4 atomes (comme par exemple dans l'acide oxalique, mais ce dernier n'est pas préféré car il risque d'être instable à la température d'utilisation).

Selon une mise en oeuvre avantageuse de la présente invention les acides moyens sont choisis parmi les acides carboxyliques, aliphatiques ou aromatiques.

Dans !a mesure où ils sont stables, ces acides peuvent comporter des fonctions éthers ou thioéthers. En particulier ils peuvent comporter des fragments "oxyde d'alcène" et en particulier "oxyde d'éthylène".

Ainsi, les composés porteurs d'au moins une fonction acide carboxylique sont des composés aliphatiques, cycloaliphatiques, aromatiques ou hétérocycliques. Ils comportent au moins une fonction acide carboxylique et au plus 6 de préférence au plus 2. Le nombre de carbone est compris entre 2 et 20 de préférence entre 2 et 12. Ils peuvent comporter des hétéroatomes ou des fonctions telles qu'esters ou carbonates ou éthers...

A titre d'exemples non limitatifs de composés comportant au moins une fonction carboxylique on peut citer l'acide acétique, l'acide propionique, l'acide isobutyrique, l'acide pivalique, l'acide benzoïque l'acide undécanoïque l'acide stéarique, l'acide cyclohexane carboxylique et leurs homologues ramifiés.

A titre d'exemples non limitatifs de composé comportant au moins deux fonctions carboxyliques l'acide adipique, l'acide dodécanedioique, l'acide undécanedioique l'acide glutarique et leurs homologues ramifiés tels que l'acide 2 éthyl hexanoique, le 2 méthyl pentanoique, le 2 éthyl succinique.

Les acides insaturés peuvent aussi être utilisés surtout si une opération de réticulation double est envisagée sur la composition. Les acide tels que les acryliques, méthacryliques, fumariques peuvent être utilisés. Il convient alors toutefois d'ajouter des piège à radicaux inhibant la polymérisation vinylique. De tels pièges sont bien connus l'homme du métier

Si l'on privilégie l'abaissement de viscosité, il est préférable d'utiliser des monoacides aliphatiques ou aromatiques d'au plus 15, avantageusement d'au plus 12, de préférence d'au plus 10 atomes de carbone. Ces monoacides ont avantageusement au moins deux carbones avantageusement au moins 3, de préférence au moins 4. Il est également préférable que ces acides présentent au moins un carbone secondaire.

Si l'on privilégie la haute fonctionnalité les acides moyens peuvent être des di- ou des tri-acides. Dans ce cas il est le plus souvent opportun de choisir un tel polyacide de manière que la formation des imides cycliques ne soit pas favorisée. Par exemple on peut choisi la molécule de façon que la distance entre deux fonctions carboxyliques soit suffisante et/ou que la géométrie de la molécule soit telle que la formation des imides cycliques ne soit pas favorisée. Ainsi, comme cela est bien connu de l'homme du métier, pour mettre en oeuvre une telle option le nombre de carbones (ou d'atomes caténaires si la chaîne n'est pas purement carbonée) entre deux fonctions carboxyliques est au moins égal à 5, ou bien la géométrie n'y est pas favorable comme dans le cas de l'acide téréphtalique ou l'acide méta ou para phénylène diacétique ; ou bien ces deux conditions sont remplies.

Le diacylurée (simple) correspond à la formule 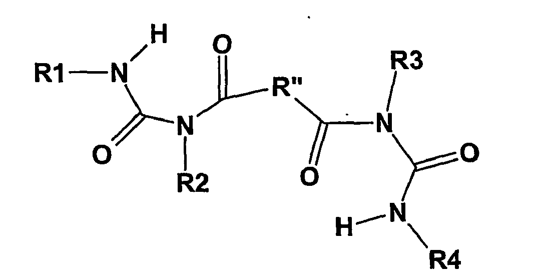 où R₁ ,R₂, R₃, ,R₄ identiques ou différents, représentent le reste d'un isocyanate, le plus souvent d'un monomère (cf. ceux qui sont cités dans la présente description et les préférences qui sont établies), après ignorance d'une fonction isocyanate (bien sûr, celle qui a réagi), R" est le reste d'un acide dicarboxylique après ignorance de deux fonctions carboxyliques (bien sûr, celles qui ont réagi).

Il est à signaler que l'on peut remplacer, totalement ou partiellement, les acides moyens par des amides carboxyliques porteur d'au moins un hydrogène sur l'azote pour faire des acylurées. Toutefois ces acylurées ne réagissent qu'une fois avec un dimère ce qui les rend moins intéressant que celles issues des acides carboxyliques.

Il est à noter que la frontière entre acides forts et acides moyens permet que les acidités soit proches(voire même qu'il y ait un léger recouvrement), mais le système fonctionne mieux lorsque au moins un des acides moyens présente une acidité significativement plus faible que celle d'au moins un des acides forts. Ainsi il est souhaitable que le pKa de l'acide fort diffère de celui de l'acide moyen, d'au moins un d'au moins une unité, avantageusement 2. Dans le cas d'une pluralité d'acide forts et/ou d'acide moyens la règle s'énonce comme ci-après. Il est souhaitable que le pKa d' au moins un des acides forts diffère d'au moins une unité de pK , avantageusement 2, de celui d'au moins un des acides moyens, avantageusement de tous ceux des acides moyens.

La teneur en acide(s) fort(s) est choisie de manière que le rapport molaire entre la somme des fonctions acides fortes exprimée en équivalent, et la somme des monomères exprimé en mole soit au moins égal à 0,1‰, avantageusement à 0,5 ‰, de préférence à 1 ‰.

Du coté de la valeur supérieure il est souhaitable que la teneur en acide(s) iort(s) soit choisie de manière que le rapport molaire entre la somme des fonctions acides forte exprimée en équivalent, et la somme des monomères exprimé en mole soit au plus égal à 2%, avantageusement à 1 %.

La teneur en acide(s) moyen(s) est choisi de manière que le rapport molaire entre la somme (numérateur) des fonctions acides moyens exprimée en équivalent, et la somme (dénominateur) des monomères exprimée en mole soit au moins égal à 2 ‰, avantageusement à 5 ‰, de préférence à 1 %.

Si l'on désire maximiser l'effet d'abaissement de viscosité, il est préférable de limiter la quantité des acides moyens mise en jeu dans la réaction. Cette quantité est une teneur quant la totalité des acides et de(s) monomère(s) sont introduit dès le début. La quantité en acide(s) moyen(s) est choisie de manière que le rapport molaire entre la somme des fonctions acides moyens exprimée en équivalent, et la somme des monomères exprimée en mole soit au plus égal à 10%, avantageusement à 5 %. Dans le cas où l'on ne privilégierait pas la viscosité il est possible de monter à 20%.

En ce qui le concerne ledit acide fort, ou le mélange d'acides forts, est introduit le plus souvent avant que l'au commence à chauffer le mélange réactionnel.

Il est le plus souvent introduit sous une forme diluée avantageusement par au plus 50 fois, de préférence par une à vingt fois sa masse de diluent.

Selon une mise en oeuvre de la présente invention ledit acide fort est dilué dans de l'eau ; en d'autres termes le diluant est d'eau ou un mélange aqueux.

Selon un mode de réalisation de la présente invention ledit acide fort est dilué dans un alcool de C1 à C14, avantageusement de C3 à C10.

Selon une mise en oeuvre préférées de la présente invention ledit acide fort est dilué dans ledit acide moyen, ou un mélange desdits acide moyen.

Dans le cadre d'une synthèse simultanée de biuret et d'acylurées, il convient de rappeler les séquences usuelles et comment s'insère la synthèse de l'acylurée.
Le procédé de synthèse consiste en la suite des opérations suivantes
- introduire dans un réacteur un isocyanate de préférence diisocyanate ou un mélange d'isocyanates
- ajouter au mélange d'isocyanates le(s) composé(s) carboxylique(s) ou le ou les amides
- ajouter le catalyseur ou le mélange de catalyseurs de biurétisation comportant au moins une fonction acide fort et une fonction acide carboxylique
- chauffer le mélange à une température de 140°C environ
- injecter l'agent de biurétisation, l'eau de telle manière que l'on contrôle le dégagement de gaz carbonique (bioxyde de carbone)
- maintenir le milieu réactionnel à une température comprise entre 130°C et 160°C pendant un temps compris entre 1 et 5 heures
- éliminer le, ou les, monomère(s) isocyanates n'ayant pas réagi par un procédé adapté tel que la distillation sous vide sur un appareil à film mince
- récupérer la composition polyisocyanate biuret acylurée.

Un autre but de la présente invention est de procurer des composition polyisocyanate ayant une viscosité réduite et/ou un fonctionnalité élevée.

Ce but, et d'autres qui apparaîtront par la suite, est atteint au moyen d'une composition polyisocyanate comportant des acylurées.

Ces compositions peuvent être obtenues soit par le procédé qui co-synthétise les acylurée et les oligomères non acylés (tel le biuret) et qui vient d'être exposé, soit par mélange d'acylurées préparée isolément. La seconde voie est plus coûteuse, mais plus efficace pour l'abaissement de viscosité.

Les acylurées selon la présente invention permettent de modifier les propriétés des compositions polyisocyanates usuellement mises sur le marché (cf. l'introduction).

Il est préférable que les acylurées soient aussi légères que possible, c'est à dire qu'elles soient avantageusement constituées d'au plus 5 motifs di-amino.

En effet la réaction peut se faire sur toute fonction isocyanate, que cette fonction appartienne à un monomère ou qu'elle appartienne à un oligomère. Pour que les acylurées aient un effet favorable marqué, il est préférable qu'elles n'incorporent que peu de monomères et donc qu'elle ne présente que peu de motifs di-amino tels que définis ci dessus.

Rappelons que le monoacylurée (correspondant à un monoacide carboxylique) ne comporte que deux motifs di-amino.

Que le bis acylurée correspond à trois monomères (et deux acides mono carboxyliques) et présente donc trois motifs di-amino.

Que les diacylurées issues des diacides comporte 4 motifs di-amino ; que l'acylurée d'un trimère vrai ou d'un biuret vrai présente 4 motifs di-amino. Si l'on revient plus spécifiquement au biuret, le taux de transformation des monomères isocyanates dépend des ratios NCO / agent de biurétisation et NCO / fonctions carboxyliques et / ou amides. Plus le ratio NCO / nucléophiles (composés à Hydrogène mobile) est grand moins le taux de transformation en fonctions isocyanates est élevé. Par ailleurs plus le taux de transformation est élevé et plus la viscosité des compositions polyisocyanates obtenues est élevée. En fonction des compositions polyisocyanates à obtenir, on fixe le ratio NCO / nucléophiles (composés à Hydrogène mobile) qui détermine le taux de transformation des fonctions isocyanates ou le taux de transformation des monomères isocyanates. En général le taux de transformation des monomères est compris entre 5 et 90 % de préférence entre 10 et 60%.

De manière surprenante, comparativement aux biurets classiques obtenus à partir de hexaméthylène diisocyanate (HDI), les composés objets de l'invention se caractérisent par une plus faible viscosité ce qui présente un intérêt pour diminuer les composés organiques volatils rejetés dans l'atmosphère. La viscosité des composés objets de l'invention est fonction bien évidemment du monomère isocyanate engagé, les composés cycloaliphatiques donnant des viscosités généralement plus élevées que les dérivés isocyanates aliphatiques (qualifié dans la présente description de « linéaires ») à courte chaîne (4 à 10 chaînons).

Selon une mise en oeuvre préférées de la présente invention, les compositions de l'invention obtenues par le procédé se caractérisent par
- la présence d'au moins 5 % en composés à motifs biuret vrai
- la présence d'au moins 1,5 % en composés acylurée vrai
- un titre NCO compris entre 0.5 et 25 % en poids de NCO pour 100 g de composition, de préférence compris entre 1 et 20 %.
- la présence de composés polybiuret et/ou acylurée

Les composés objets de l'invention peuvent être utilisés pour la synthèse de dérivés fonctionnels ou la préparation de compositions pour revêtements appliqués sur des surfaces organiques ou minérales (métal, plastiques, bois, tissu, cuir, béton, ...) à des fins décoratives, fonctionnelles et/ou de protection,

Les composés de la présente invention peuvent aussi être incorporés dans la fabrication de matériaux à base de polyuréthannes (mousses ), d'élastomères, de fibres ou de caoutchoucs.

Les domaines d'application sont donc très divers (peintures, vernis, adhésifs, pneumatiques ...) et concernent aussi bien des applications d'intérieur, qu'extérieur ou exposés à des milieux particuliers ( matériaux immergés dans l'eau...).

Les composés de l'invention présentent des indices de coloration faible inférieur à 200 hazen.

Les fonctions isocyanates portées par les composés de l'invention du mélange final peuvent être fonctionnalisés définitivement ou temporairement, totalement ou partiellement par différents composants nucléophiles qui peuvent être choisis parmi
- les agents de masquage temporaires des fonctions isocyanates bien connus de l'homme de l'art tels que les oximes, les pyrazoles, les triazoles, les imidazoles, les lactames, les cétoesters, l'ensemble de ces composés pouvant porter un ou plusieurs substituants. On peut ainsi citer à titre d'exemples non limitatifs la méthyléthylcétoxime, le 3,5 diméthylpyrazole, l'epsilon caprolactame...
- les alkoxysilanes à fonctions nucléophiles tels que par exemple les amino ou thio alkyle trialkoxysilanes,
- les hydroxyalkyl acrylates
   des allongeurs de chaîne tels que des diamines, des diols OU polyols

Ces composés peuvent être mis en réaction en phase organique ou phase aqueuse.

Dans le cas de revêtements de type polyuréthanne ou polyurée, les coréactifs des composés de l'invention peuvent être
- des poly(thi)ols acryliques dérivés de la polymérisation de composés monomères porteurs de doubles liaisons activées tels que les acrylates ou méhacrylates de (cyclo)alkyles ou d'hydroxyalkyles
- des polyamines acryliques
- des polymères poly(thi)ols ou polyamines polyesters issus de la polycondensation d'un diacide ou diester ou carbonate avec un diol ou un aminoalcool
- des polymères poly(thi)ols polycarbonates
- des composés polysiloxanes comportant des motifs alkyles porteurs de fonctions hydroxy et/ou amino et/ou thio des polyamines
- des polyéthers porteurs de fonctions hydroxyles et / ou amines et/ou thiols fonctions hydroxyles
- des composés polypréniques à fonctions hydroxylés ou acides carboxyliques
- des alkoxysilanes
   ou des composés polymères à fonctions hydroxyles, thiols ou amines masquées temporairement. A titre d 'exemple de ces fonctions masquées on peut citer les imines, les dioxolanes, les acétals, etc....

La synthèse de ces polymères et les monomères constitutifs de ces polymères sont largement connus de l'homme de l'art. A titre d'exemples de monomères porteurs de double liaisons on peut citer les acrylates et méthacrylate de n butyle, de cyclohexyle, de méthyle, d'isopropyle, de tertiobutyle, l'acrylamide et le méthacrylamide ainsi que leurs dérivé N alkylés, les acides acrylique et méthacryliques, le styrène, le butadiène, les dérivés vinylés.

Comme exemples non limitatifs de monomères de la réaction de polycondensation on peut citer l'acide adipique, l'acide succinique, glutarique, dodécanedioique, l'acide phtalique, les esters de ces diacides , les carbonates d'alkylène tels que le carbonate de méthyle, le carbonate d'éthyle, le carbonate de propylène ou d'éthylène, les diols tels que butane diols, hexane diols, cyclohexanediols...

A titre d'exemple de composés polyéthers ou polymères époxy on peut citer l'oxyde d'éthylène, ou de propylène

Des composés tels que pigments, additifs de rhéologie, catalyseurs, charges diverses peuvent être ajoutées aux formulations pour apporter les propriétés recherchées.

Les exemples suivants sont représentatifs de l'invention.

### Méthodes analytiques :

Dosage des fonctions isocyanates : On utilise la méthode standardisée de dosage des fonctions isocyanates par la méthode dite de la dibutylamine.
Dosage en retour par une solution titrée d'HCL, de la N,N dibutylamine non consommée par la réaction avec les fonctions isocyanates du mélange à doser.
La différence entre la N,N dibutylamine ayant réagi et la quantité introduite permet de mesurer le titre en fonctions isocyanates du mélange à doser.

### Détermination des Mn et Mw des polymères :

On utilises la chromatographie de perméation de gel comme méthode de détermination des masses moléculaires moyenne en nombre et en poids. Des étalons de polystyrène de poids moléculaire connu sont utilisés pour calibrer les colonnes de perméation de gel. Le solvant d'élution utilisé est un bon solvant des polymères étalons et des polymères à analyser. Il est choisi en tenant compte des contraintes apportées par la méthode de détection des polymères (réfractométrie ou analyse par absorption ultraviolet ou analyse par infrarouge). Ce solvant est choist parmi les éthers tels que le tétrahydrofuranne, les dérivés chlorés tels que le dichlorométhane...

On compare le volume d'élution des polymères à analyser aux volumes d'élution des polymères étalons et on en déduit ainsi la masse moléculaire. Les oligomères élués constitutifs du mélange à analyser peuvent aussi être récupérés séparément pour analyse et caractérisation par diverses techniques d'analyse structurale tels que RMN H1, RMN C13, infra rouge....

Ces techniques permettent une excellente détermination des quantités d'oligomère de poids moléculaire inférieur à 1500.
Détermination de la viscosité

Deux méthodes donnant des résultats sensiblement identiques sont utilisées pour déterminer la viscosité, les résultats sont donnés pour une température de 25°C.

La première méthode s'appuie sur la Norme NF T 30 - 029 d'octobre 1980 méthode d'utilisation d'un viscosimètre rotatif pour la mesure de la viscosité dynamique apparente des vernis peintures et préparations associées.

Pour ce faire, on utilise un rhéomètre de marque Rhéovisco LV8, la température de travail est de 25°C. Le choix de l'appareillage et les conditions opératoires retenues sont fonction du domaine de viscosité. Ainsi pour une plage de viscosités comprises entre 0 et 5000 mPa s on utilise le cylindre L2 avec une vitesse de 6 tours / minutes, pour une plage de viscosités comprises entre 0 et 20 000 mPa s on utilise le cylindre L3 avec une vitesse de 6 tours / minutes et pour une plage de viscosités comprises entre 0 et 1000 mPa s on utilise te cylindre L1 avec une vitesse de 6 tours / minutes.

Une seconde méthode utilisée pour mesurer la viscosité est la méthode dite à la chute de bille. La valeur mesurée est très proche de la valeur donnée par la méthode précédente.

On utilise une bille en inox de densité ( d =7,8) et de diamètre connu ( 2 mm).

On introduit dans un tube à essai de diamètre 20 mm et de hauteur 20 cm le polyisocyanate de viscosité inconnue. Le tube possède deux repères espacés de 10 cm. Il est conditionnée à la température de mesure 25°C par trempage dans un bain thermostaté et régulé.

On pose une bille sur le dessus du liquide et on mesure le temps qu'elle met pour parcourir la distance entre repères. La valeur de la viscosité est obtenue par application de la formule suivante et s'exprime en mPa.s à 25°C.

Viscosité à 25°C = 1,11 *t * 100 avec t le temps de chute de bille pour une distance de 10 cm entre repères en secondes.

### Exemples de synthèse

### Exemple 1 : Composition polyisocyanate à motif biuret et acylurée

On dispose d'un réacteur de 21 inerté à l'azote, équipé d'une agitation mécanique, d'un réfrigérant, et de soupapes d'évacuation de gaz, et d'un tube plongeant raccordé à un second réacteur tubulaire ascendant de 40 cm de longueur et 1 cm de diamètre, préchauffé à environ 200°C, et balayé par de l'azote. Ce réacteur tubulaire étant lui-même raccordé à un dispositif d'alimentation d'eau liquide.

Dans le réacteur de 2 litres , on introduit 1000g de hexaméthylène diisocyanate (HDI).Le titre NCO de départ est de 1,19. La température du milieu réactionnel est de 21°C. On ajoute 2,58 g d'une solution de dibutylphosphate (DBP) à 50% poids dans le 2éthyl hexanol et 0,89g d'acide propionique. Les ratios molaires respectifs DBP / HDI et Acide propionique / HDI sont de 1 10⁻³ et 2 10⁻³. Le milieu réactionnel est agité à 250 tours par minutes. La température du milieu réactionnel est portée à 140 °C.

Dans le dispositif d'alimentation d'eau, on introduit 19 g d'eau soit un ratio molaire HDI / H2O de 5,65.

On injecte en 1 heure les 19 g d'eau qui passe de l'état liquide à l'état vapeur dans le réacteur tubulaire balayé à l'azote (120 / heure). La réaction démarre immédiatement et on observe dans un dégagement de dioxyde de carbone. La température du réacteur est maintenu à 140°C.

Le titre NCO du milieu réactionnel après 20 minutes d'injection d'eau est de 1,138. Après 35 minutes il est de 1,060.

A la fin de l'injection de l'eau, le titre NCO est de 0,961 mole pour 100g.

On observe pratiquement pas de particules insolubles de polyurée de HDI

La réaction est laissée sous agitation encore 2 heures, temps au bout duquel le titre NCO du milieu réactionnel se stabilise à 0,901 mole pour 100g. Le taux de transformation en HDI est de l'ordre de 48,7%.

Le milieu réactionnel est alors filtré sur un fritté N°1 pour donner un taux d'insolubles de 20,5 mg pour une masse de milieu réactionnel récupérée de 961g.

860 g du milieu réactionnel sont ensuite purifiés par 2 distillations successives de l'HDI monomère sur un appareil à film mince sous vide de 0,2 mBar et à 160°C avec un débit de 400g / heure pour le premier passage et 200g / heure pour le second passage.

On récupère 310g d'une composition polyisocyanate à motifs biurets et acylurée dont le titre NCO est de 22,5% et la viscosité à 25°C est de 4850 mPa s. Le taux de HDI monomère est inférieur à 0,5%.

L'analyse par chromatographie de perméation de gel couplée à l'analyse infra rouge et appuyée par l'analyse RMN C13 permet de montrer que
- la teneur en acylurée vrai de HDI et d'acide propionique est de 1,5% poids
- la teneur en biuret vrai est 43%
- la teneur en dimère de HDI est de 4,3%.

### Exemple 2 : Composition polyisocyanate à motif biuret et acylurée

On dispose du même type de montage de réacteurs que dans l'exemple 1 et on procède de la même manière sauf que l'on travaille avec 1500g de HDI, 3,1g d'acide propionique, et 23g d'acide para toluène sulfonique (pTSA) à 20 % poids dans le 2 éthyl hexanol comme catalyseur acide fort.

La quantité d'eau est de 25 g.

Les ratio molaires respectifs sont : pTSA / HDI : 3 10⁻³ / ac propionique / HDI : 5,2 10⁻³ / HDI / H2O : 6,4

Le titre du milieu réactionnel après ajout de l'acide propionique et de la solution de catalyseur pTSA est de 1,146.

Le titre NCO du milieu réactionnel après 45 minutes d'injection d'eau est de 0,950.

A la fin de l'injection de l'eau, le titre NCO est de 0,871 mole pour 100g.

On observe pratiquement pas de particules insolubles de polyurée de HDI

La réaction est laissée sous agitation encore 2 heures, temps au bout duquel le titre NCO du milieu réactionnel se stabilise à 0,834 mole pour 100g. Le taux de transformation en HDI est de l'ordre de 55 %.

Le milieu réactionnel est alors filtré sur un fritté N°1 pour donner un taux d'insolubles de 38 mg pour une masse de milieu réactionnel récupérée de 1430 g.

La composition polyisocyanate à motifs biurets et acylurée obtenue après distillation présente un titre NCO de 21,8%.

Le taux de HDI monomère est inférieur à 0,5%. Le taux d'acylurée de HDI et d'acide propionique est de 2,3%. La teneur en dimère de HDI est de 4%. La teneur en biuret vrai est de 40%.

## Revendications

1. Procédé de synthèse de composition polyisocyanate comportant des acylurées **caractérisé par le fait que** l'on soumet une composition dite initiale comportant des dérivés comportant au moins deux fonctions isocyanate à l'action d'au moins deux acides dont l'un au moins est un acide fort (pKa ≤3) et dont un autre au moins est un acide de force moyenne (3≤ pKa ≤6) à une température au moins égale à 50°C.

2. Procédé selon la revendication 1, **caractérisé par le fait qu'**au moins un des dérivés isocyanates est un monomère.

3. Procédé selon les revendications 1 et 2, **caractérisé par le fait que** les dérivés monomères représentent au moins 1/3, avantageusement ½ en masse de la dite composition initiale.

4. Procédé selon les revendications 1 à 3, **caractérisé par le fait que** le dérivé monomère, les dérivés monomères, représentent au moins 90%, avantageusement 95% en masse de la dite composition initiale.

5. Procédé selon les revendications 1 à 4, **caractérisé par le fait que** le dérivé monomère, ou qu'au moins un des dérivés monomères, est au moins partiellement aliphatique, c'est-à-dire qu'au moins une des, avantageusement deux des, de préférence toutes les fonctions isocyanates du motif diisocyanate est portée par un carbone d'hybridation sp³.

6. Procédé selon les revendications 1 à 5, **caractérisé par le fait que** ladite composition polyisocyanate comporte des dérivés à fonction biuret et **par le fait que** ladite composition initiale est en outre mise en contact avec une amine ou un réactif aminogène, avantageusement de l'eau sous la forme d'un fluide.

7. Procédé selon les revendications 1 à 6, **caractérisé par le fait que** ladite composition polyisocyanate comporte des dérivés à fonction biuret et **par le fait que** ladite composition initiale est en outre mise en contact avec une amine ou un réactif aminogène, avantageusement de l'eau sous la forme d'un fluide, le rapport molaire entre l'amine (engendrée ou introduite) et la somme des monomères exprimée en mole étant choisi dans l'intervalle fermé (c'est-à-dire contenant les bornes) allant de 1/2 à 1/50, avantageusement dans celui allant de 1/3 à 1/25.

8. Procédé selon les revendications 6 et 7, **caractérisé par le fait que** ladite composition initiale est mise en contact avec de l'eau en présence desdits acides moyen(s) et fort(s),avantageusement préalablement ajoutés.

9. Procédé selon les revendications 1 à 8, **caractérisé par le fait que** l'acide fort est choisi parmi les acides aliphatiques ou aromatiques sulfoniques, phosphoniques y compris carboxyliquephosphonique, ester phosphorique perhalogénoalcanoïques.

10. Procédé selon les revendications 1 à 9, **caractérisé par le fait que** les acides moyens sont choisis parmi les acides carboxyliques aliphatiques ou aromatiques.

11. Procédé selon les revendications 1 à 10, **caractérisé par le fait que** I(es) acide(s) moyen(s) est(sont) au moins partiellement introduit dans le milieu réactionnel sous la forme d'un précurseur.

12. Procédé selon les revendications 1 à 11, **caractérisé par le fait que** l(es) acide(s) fort(s) est(sont) au moins partiellement introduit dans le milieu réactionnel sous la forme d'un précurseur.

13. Procédé selon les revendications 1 à 12, **caractérisé par le fait qu'**au moins un des acides moyens diffère d'au moins un acide fort d'au moins une unité de pK , avantageusement 2.

14. Procédé selon les revendications 1 à 13, **caractérisé par le fait que** la teneur en acide(s) fort(s) est choisie de manière que le rapport molaire entre la somme des fonctions acides fortes exprimée en équivalent, et la somme des monomères exprimé en mole soit au moins égal à 0,1‰, avantageusement à 0,5 ‰, de préférence à 1 ‰.

15. Procédé selon les revendications 1 à 14, **caractérisé par le fait que** la teneur en acide(s) fort(s) est choisi de manière que le rapport molaire entre la somme des fonctions acides forte exprimée en équivalent, et la somme des monomères exprimé en mole soit au plus égal à 2%, avantageusement à 1 %.

16. Procédé selon les revendications 1 à 15, **caractérisé par le fait que** la teneur en acide(s) moyen(s) est choisi de manière que le rapport molaire entre la somme des fonctions acides moyens exprimée en équivalent, et la somme des monomères exprimée en mole soit au moins égal à 2 ‰, avantageusement à 5 ‰, de préférence à 1 %.

17. Procédé selon les revendications 1 à 16, **caractérisé par le fait que** la teneur en acide(s) moyen(s) est choisie de manière que le rapport molaire entre la somme des fonctions acides moyens exprimée en équivalent, et la somme des monomères exprimée en mole soit au plus égal à 10%, avantageusement à 5 %.

18. Procédé selon les revendications 1 à 17, **caractérisé par le fait que** ledit acide fort est introduit sous une forme diluée avantageusement par au plus 50 fois, de préférence par une à vingt fois sa masse de diluent.

19. Procédé selon la revendication 18, **caractérisé par le fait que** ledit acide fort est dilué dans de l'eau

20. Procédé selon la revendication 19, **caractérisé par le fait que** ledit acide fort est dilué dans un alcool de C1 à C14, avantageusement de C3 à C10.

21. Procédé selon la revendication 20, **caractérisé par le fait que** ledit acide fort est dilué dans ledit acide moyen

## Claims

1. Method for the synthesis of a polyisocyanate composition containing acylureas, **characterised in that** an initial composition containing derivatives containing at least two isocyanate functions is subjected to the action of at least two acids, at least one of which is a strong acid (pKa ≤ 3) and at least one other of which is a moderate-strength acid (3 ≤ pKa ≤ 6), at a temperature of at least 50°C.

2. Method according to claim 1, **characterised in that** at least one of the isocyanate derivatives is a monomer.

3. Method according to claims 1 and 2, **characterised in that** the monomer derivatives represent at least 1/3, advantageously ½ by mass of said initial composition.

4. Method according to claims 1 to 3, **characterised in that** the monomer derivative, the monomer derivatives, represent at least 90%, advantageously 95% by mass of said initial composition.

5. Method according to claims 1 to 4, **characterised in that** the monomer derivative, or at least one of the monomer derivatives, is at least partially aliphatic, in other words that at least one, advantageously two, preferably all of the isocyanate functions of the diisocyanate unit are carried by an sp³ hybridisation carbon.

6. Method according to claims 1 to 5, **characterised in that** said polyisocyanate composition contains derivatives having a biuret function and that said initial composition is additionally brought into contact with an amine or an aminogenic reactant, advantageously water in the form of a fluid.

7. Method according to claims 1 to 6, **characterised in that** said polyisocyanate composition contains derivatives having a biuret function and that said initial composition is additionally brought into contact with an amine or an aminogenic reactant, advantageously water in the form of a fluid, the molar ratio between the amine (generated or introduced) and the sum of the monomers expressed in mol being chosen within the closed interval (i.e. including the limits) from ½ to 1/50, advantageously within that from 1/3 to 1/25.

8. Method according to claims 6 and 7, **characterised in that** said initial contact is brought into contact with water in the presence of said moderate and strong acid(s), which are advantageously added beforehand.

9. Method according to claims 1 to 8, **characterised in that** the strong acid is chosen from aliphatic or aromatic sulfonic acids, phosphonic acids, including carboxylic-phosphonic acids, phosphoric acid esters, perhaloalkanoic acids.

10. Method according to claims 1 to 9, **characterised in that** the moderate acids are chosen from aliphatic or aromatic carboxylic acids.

11. Method according to claims 1 to 10, **characterised in that** the moderate acid(s) is (are) at least partially introduced into the reaction medium in the form of a precursor.

12. Method according to claims 1 to 11, **characterised in that** the strong acid(s) is (are) at least partially introduced into the reaction medium in the form of a precursor.

13. Method according to claims 1 to 12, **characterised in that** at least one of the moderate acids differs from at least one strong acid by at least one pK unit, preferably two.

14. Method according to claims 1 to 13, **characterised in that** the content of strong acid(s) is chosen such that the molar ratio between the sum of strong acid functions expressed in equivalents and the sum of monomers expressed in mol is at least equal to 0.1‰, advantageously 0.5‰, preferably 1‰.

15. Method according to claims 1 to 14, **characterised in that** the content of strong acid(s) is chosen such that the molar ratio between the sum of strong acid functions expressed in equivalents and the sum of monomers expressed in mol is at most equal to 2%, advantageously 1%.

16. Method according to claims 1 to 15, **characterised in that** the content of moderate acid(s) is chosen such that the molar ratio between the sum of moderate acid functions expressed in equivalents and the sum of monomers expressed in mol is at least equal to 2‰, advantageously 5‰, preferably 1%.

17. Method according to claims 1 to 16, **characterised in that** the content of moderate acid(s) is chosen such that the molar ratio between the sum of moderate acid functions expressed in equivalents and the sum of monomers expressed in mol is at most equal to 10%, advantageously 5%.

18. Method according to claims 1 to 17, **characterised in that** said strong acid is introduced in a form that is diluted advantageously by at most 50 times, preferably by one to 20 times, its mass of diluent.

19. Method according to claim 18, **characterised in that** said strong acid is diluted in water.

20. Method according to claim 19, **characterised in that** said strong acid is diluted in a C1 to C14 alcohol, advantageously a C3 to C10 alcohol.

21. Method according to claim 20, **characterised in that** said strong acid is diluted in said moderate acid.

## Patentansprüche

1. Verfahren zur Synthese einer Acylharnstoffe umfassenden Polyisocyanatzusammensetzung, **dadurch gekennzeichnet, dass** eine "Ausgangszusammensetzung" genannte Zusammensetzung, die wenigstens zwei Isocyanatfunktionen enthaltende Derivate umfasst, der Einwirkung wenigstens zweier Säuren, wovon wenigstens eine eine starke Säure (pKa ≤ 3) ist und wovon wenigstens eine andere eine mittelstarke Säure (3 ≤ pKa ≤ 6) ist, bei einer Temperatur von wenigstens 50 °C unterworfen wird.

2. Verfahren gemäß Anspruch 1, **dadurch gekennzeichnet, dass** wenigstens eines der Isocyanatderivate ein Monomer ist.

3. Verfahren gemäß den Ansprüchen 1 und 2, **dadurch gekennzeichnet, dass** die monomeren Derivate wenigstens 1/3, vorteilhafterweise ½ der Masse der besagten Ausgangszusammensetzung darstellen.

4. Verfahren gemäß den Ansprüchen 1 bis 3, **dadurch gekennzeichnet, dass** das monomere Derivat oder die monomeren Derivate wenigstens 90 %, vorteilhafterweise 95 % der Masse der besagten Ausgangszusammensetzung darstellen.

5. Verfahren gemäß den Ansprüchen 1 bis 4, **dadurch gekennzeichnet, dass** das monomere Derivat oder wenigstens eines der monomeren Derivate wenigstens teilweise aliphatisch ist, das heißt, dass wenigstens eine, vorteilhafterweise zwei, bevorzugt alle Isocyanatfunktionen der Diisocyanatstruktureinheit von einem Kohlenstoffatom mit sp³-Hybridisierung getragen werden.

6. Verfahren gemäß den Ansprüchen 1 bis 5, **dadurch gekennzeichnet, dass** die Polyisocyanatzusammensetzung Derivate mit einer Biuretfunktion umfasst und dass die Ausgangszusammensetzung außerdem mit einem Amin oder aminerzeugenden Reagenz, vorteilhafterweise Wasser in Form eines Fluids zusammengebracht wird.

7. Verfahren gemäß den Ansprüchen 1 bis 6, **dadurch gekennzeichnet, dass** die Polyisocyanatzusammensetzung Derivate mit einer Biuretfunktion umfasst und dass die Ausgangszusammensetzung außerdem mit einem Amin oder aminerzeugenden Reagenz, vorteilhafterweise Wasser in Form eines Fluids zusammengebracht wird, wobei das Molverhältnis zwischen dem (erzeugten oder zugesetzten) Amin und der Summe der Monomeren, ausgedrückt in Mol, aus dem geschlossenen (d. h. die Grenzen enthaltenden) Intervall, das von ½ bis 1/50, vorteilhafterweise aus dem ausgewählt ist, das von 1/3 bis 1/25 reicht.

8. Verfahren gemäß den Ansprüchen 6 und 7, **dadurch gekennzeichnet, dass** die Anfangszusammensetzung mit Wasser in Gegenwart der mittelstarken und starken Säuren, die vorteilhafterweise zuvor zugefügt wurden, zusammengebracht wird.

9. Verfahren gemäß den Ansprüchen 1 bis 8, **dadurch gekennzeichnet, dass** die starke Säure aus aliphatischen oder aromatischen Sulfon- und Phosphonsäuren, worunter Phosphoncarbonsäuren, Phosphorsäureester und Perhalogenalkancarbonsäuren eingeschlossen sind, ausgewählt ist.

10. Verfahren gemäß den Ansprüchen 1 bis 9, **dadurch gekennzeichnet, dass** die mittelstarken Säuren aus aliphatischen oder aromatischen Carbonsäuren ausgewählt sind.

11. Verfahren gemäß den Ansprüchen 1 bis 10, **dadurch gekennzeichnet, dass** die mittelstarke(n) Säure(n) dem Reaktionsmedium wenigstens zum Teil in Form eines Vorläufers zugesetzt wird (werden).

12. Verfahren gemäß den Ansprüchen 1 bis 11, **dadurch gekennzeichnet, dass** die starke(n) Säure(n) dem Reaktionsmedium wenigstens zum Teil in Form eines Vorläufers zugesetzt wird (werden).

13. Verfahren gemäß den Ansprüchen 1 bis 12, **dadurch gekennzeichnet, dass** sich die wenigstens eine mittelstarke Säure von der wenigstens einen starken Säure um wenigstens eine, vorteilhafterweise 2 pK-Einheiten unterscheidet.

14. Verfahren gemäß den Ansprüchen 1 bis 13, **dadurch gekennzeichnet, dass** der Gehalt an starker (starken) Säure(n) so gewählt ist, dass das Molverhältnis zwischen der Summe der starken Säurefunktionen, ausgedrückt als Äquivalent, und der Summe der Monomeren, ausgedrückt in Mol, wenigstens 0,1 ‰, vorteilhafterweise 0,5 ‰ und bevorzugt 1 ‰ ist.

15. Verfahren gemäß den Ansprüchen 1 bis 14, **dadurch gekennzeichnet, dass** der Gehalt an starker (starken) Säure(n) so gewählt ist, dass das Molverhältnis zwischen der Summe der starken Säurefunktionen, ausgedrückt als Äquivalent, und der Summe der Monomeren, ausgedrückt in Mol, höchstens 2 % und vorteilhafterweise 1 % ist.

16. Verfahren gemäß den Ansprüchen 1 bis 15, **dadurch gekennzeichnet, dass** der Gehalt an mittelstarker (mittelstarken) Säure(n) so gewählt ist, dass das Molverhältnis zwischen der Summe der mittelstarken Säurefunktionen, ausgedrückt als Äquivalent, und der Summe der Monomeren, ausgedrückt in Mol, wenigstens 2 ‰, vorteilhafterweise 5 ‰ und bevorzugt 1 % ist.

17. Verfahren gemäß den Ansprüchen 1 bis 16, **dadurch gekennzeichnet, dass** der Gehalt an mittelstarker (mittelstarken) Säure(n) so gewählt ist, dass das Molverhältnis zwischen der Summe der mittelstarken Säurefunktionen, ausgedrückt als Äquivalent, und der Summe der Monomeren, ausgedrückt in Mol, höchstens 10 % und vorteilhafterweise 5 % ist.

18. Verfahren gemäß den Ansprüchen 1 bis 17, **dadurch gekennzeichnet, dass** die starke Säure in verdünnter Form, vorteilhafterweise um das 50fache, bevorzugt um das Ein- bis Zwanzigfache der Masse an Verdünnungsmittel, zugesetzt wird.

19. Verfahren gemäß Anspruch 18, **dadurch gekennzeichnet, dass** die starke Säure in Wasser verdünnt ist.

20. Verfahren gemäß Anspruch 19, **dadurch gekennzeichnet, dass** die starke Säure in einem C1-C14-, vorteilhafterweise C3-C10-Alkohol verdünnt ist.

21. Verfahren gemäß Anspruch 20, **dadurch gekennzeichnet, dass** die starke Säure in der mittelstarken Säure verdünnt ist.
